# EUROPÄISCHE PATENTSCHRIFT

(11) **EP 3 985 346 B1**
(45) Veröffentlichungstag und Bekanntmachung des Hinweises auf die Patenterteilung: **01.11.2023**
(21) Anmeldenummer: 21196549.6
(22) Anmeldetag: 14.09.2021
(51) Int. Cl.: G01B 5/00

(54) **RADIALKRAFT-VORRICHTUNG FÜR EIN KONTURMESSGERÄT UND MESSSYSTEM**
RADIAL FORCE DEVICE FOR A CONTOUR MEASURING DEVICE AND MEASURING SYSTEM
DISPOSITIF DE FORCE RADIALE POUR UN APPAREIL DE MESURE DE CONTOUR ET SYSTÈME DE MESURE

(30) Priorität: 15.10.2020 DE 102020127164
(43) Veröffentlichungstag der Anmeldung: 20.04.2022
(73) Patentinhaber: JENOPTIK Industrial Metrology Germany GmbH, 78052 Villingen-Schwenningen (DE)
(72) Erfinder: Tomoscheit, Nils-Olaf, 07747 Jena (DE); Tuch, Carsten, 07407 Rudolstadt (DE)
(74) Vertreter: Waldauf, Alexander

(56) Entgegenhaltungen:
- DE-A1- 2 909 836
- US-A- 2 696 675
- US-A- 2 701 170
- US-A1- 2020 309 503

## Beschreibung

Der vorliegende Ansatz bezieht sich auf eine Radialkraft-Vorrichtung für ein Konturmessgerät und ein Messsystem.

Unter Verwendung eines Konturmessgeräts lässt sich eine Kontur eines Werkstücks vermessen. Die US 2 696 675 A offenbart ein Messgerät mit verstellbarer Halterung. Die DE 29 09 8367 A1 offenbart eine Präzisionsmeßvorrichtung für zylindrische Objekte. Die US 2020/0309503 A1 beschreibt ein drehbares Gestell, das in der Lage ist, die Belastung einer Zuführvorrichtung und die Verformung einer Ablageebene zu reduzieren. Die US 2 701 170 A beschreibt eine Spindellagerung.

### Offenbarung der Erfindung

Vor diesem Hintergrund werden mit dem vorliegenden Ansatz eine Radialkraft-Vorrichtung für ein Konturmessgerät und ein Messsystem gemäß den Hauptansprüchen vorgestellt. Vorteilhafte Ausgestaltungen ergeben sich aus den jeweiligen Unteransprüchen und der nachfolgenden Beschreibung.

Die mit dem vorgestellten Ansatz erreichbaren Vorteile bestehen darin, dass eine Möglichkeit geschaffen wird, eine Vermessung eines belasteten Werkstückes während einer Messwertaufnahme durchzuführen.

Es wird eine Radialkraft-Vorrichtung für ein Konturmessgerät zum Messen einer Kontur eines um eine Rotationsachse rotierbaren wellenförmigen Werkstücks vorgestellt. Mit Hilfe der Radialkraft-Vorrichtung kann eine radiale Kraft auf das Werkstück gebracht werden. Die Radialkraft-Vorrichtung weist einen Klemmkörper, eine Krafteinleitungsrolle, zumindest eine Gegenrolle und eine Koppeleinrichtung auf. Der Klemmkörper ist zum radialen Umgreifen eines in dem Konturmessgerät aufgenommenen Werkstückabschnitts des Werkstücks ausgeformt. Die Krafteinleitungsrolle ist zum Aufbringen einer mechanischen radialen Kraft auf das Werkstück ausgebildet, um eine Belastung auf das Werkstück einzuleiten, wobei die Krafteinleitungsrolle radial verschiebbar zum Werkstück an dem Klemmkörper gelagert ist. Die Gegenrolle ist in dem Klemmkörper gelagert und zum Abstützen des Werkstücks beim Aufbringen der Kraft ausgebildet. Die Koppeleinrichtung ist zum Koppeln des Klemmkörpers an dem Konturmessgerät ausgeformt.

Die hier vorgestellte Radialkraft-Vorrichtung ermöglicht ein Aufbringen einer mechanischen Kraft auf ein Werkstück, wobei die Kraft beispielsweise eine Betriebskraft im für das Werkstück vorgesehenen Betrieb simuliert, um einen Betriebstest beispielsweise in Bezug auf eine Materialbeständigkeit und/oder Verformbarkeit für das Werkstück zu ermöglichen. Die Krafteinleitungsrolle ist parallel zur Rotationsachse, im Folgenden auch als "C-Achse" bezeichnet, rotierbar gelagert, beispielsweise in einem Kugellager. Hierbei ist die Krafteinleitungsrolle radial auf die Rotationsachse zu verschiebbar an dem Klemmkörper gelagert, entlang einer orthogonal zu der Rotationsachse verlaufenden Y-Achse. Die Gegenrolle dient hierbei vorteilhafterweise einer Stabilisierung des Werkstücks beim Aufbringen der Kraft, damit das Werkstück nicht aus seiner Position zwischen beispielsweise zwei Zentrierspitzen des Konturmessgeräts gedrückt wird. Auch die Gegenrolle ist parallel zur Rotationsachse rotierbar in einem Kugellager gelagert.

Der Klemmkörper kann im Wesentlichen U-förmig zum radialen Umgreifen des Werkstückabschnitts ausgeformt sein, wobei die Krafteinleitungsrolle und Gegenrolle auf je gegenüberliegenden Schenkeln des U-förmigen Klemmkörpers angeordnet sind. Dies schafft eine praktische Möglichkeit zum Umgreifen des Werkstücks. Auch kann ein solcher U-förmiger Klemmkörper praktischerweise über die Öffnung des U-förmigen Klemmkörpers an ein bereits in dem Konturmessgerät positioniertes Werkstück geschoben werden, oder aber das Werkstück kann erst beim Positionieren in das Konturmessgerät in die Öffnung des bereits an dem Konturmessgerät gekoppelten U-förmigen Klemmkörpers geschoben werden.

Die Radialkraft-Vorrichtung weist ferner zumindest eine in dem Klemmkörper gelagerte zweite Gegenrolle zum Abstützen des Werkstücks beim Aufbringen der Kraft auf.

Dies erhöht eine Stabilität des Werkstücks in dem Konturmessgerät beim Aufbringen der Kraft.

Gemäß der Erfindung sind die Gegenrolle und die zweite Gegenrolle fluchtend angeordnet. Dies vergrößert eine der Kraft entgegengebrachte Abstützfläche und somit Stabilität für das Werkstück in dem Konturmessgerät beim Aufbringen der Kraft.

Die Krafteinleitungsrolle ist in einer horizontalen Ebene zwischen der Gegenrolle und der zweiten Gegenrolle angeordnet, für den Fall, dass sie fluchtend angeordnet sind. Beispielsweise kann die Krafteinleitungsrolle mittig zwischen der Gegenrolle und der zweiten Gegenrolle angeordnet sein. Dies ermöglicht ein gleichmäßiges Abstützen und ein Vermeiden eines Kippens des Werkstücks beim

Aufbringen der Kraft. In dem Klemmkörper ist weiterhin eine weitere Gegenrolle gelagert, auf horizontaler Ebene mit der Gegenrolle angeordnet ist, und eine weitere zweite Gegenrolle gelagert, die auf horizontaler Ebene mit der zweiten Gegenrolle angeordnet ist. Es kann so das Werkstück beim Aufbringen der Kraft auf einen mittigen Abschnitt einer Seite des Werkstücks beispielsweise an einem oberen Abschnitt auf einer der Seite gegenüberliegenden Seite zwischen der Gegenrolle und der weiteren Gegenrolle abgestützt werden und an einem unteren Abschnitt auf der der Seite gegenüberliegenden Seite zwischen der zweiten Gegenrolle und der weiteren Gegenrolle abgestützt werden.

Die Radialkraft-Vorrichtung weist ferner ein Bauteil auf in dem die Krafteinleitungsrolle gelagert ist. Das Bauteil ist radial verschiebbar an dem Klemmkörper gelagert. Dies schafft eine Möglichkeit zur beweglichen Aufnahme der Krafteinleitungsrolle sowie zum Schutze dieser.

Gemäß der Erfindung weist die Radialkraft-Vorrichtung eine Bewegungsumkehreinrichtung auf, die ausgebildet ist, um den Klemmkörper ansprechend auf eine Bewegung des Bauteils in eine radiale erste Richtung in eine der ersten Richtung entgegengesetzte zweite Richtung zu bewegen. Die radiale erste Richtung kann eine Bewegung entlang der Y-Achse auf das Werkstück zu sein, um im Folgenden die Kraft auf das Werkstück zu bewirken. Die Bewegungsumkehreinrichtung ermöglicht somit vorteilhafterweise auch ein Andocken oder sogar eine der Kraft entgegengesetzten Kraft der gegenüberliegenden Gegenrolle/n an das Werkstück hin. Dies kann lediglich durch die Bewegung des die Krafteinleitungsrolle haltenden Bauteils zu dem Werkstück hin bewirkt werden.

Die Koppeleinrichtung kann ausgeformt sein, um eine Längsbewegung des Klemmkörpers entlang einer Y-Achse und/oder eine Rotationsbewegung um die Y-Achse und/oder eine Längsbewegung des Klemmkörpers entlang einer X-Achse und/oder eine Rotationsbewegung um die X-Achse zu ermöglichen, wobei die Y-Achse und die X-Achse orthogonal zueinander und orthogonal zu der Rotationsachse ausgerichtet sind. Dies ermöglicht mehrere Freiheitsgrade, beispielsweise vier Freiheitsgrade, gegenüber dem Konturmessgerät, wodurch sich vorteilhafterweise ein anpassungsfähiger geschlossener Kraftfluss zwischen der Radialkraft-Vorrichtung und dem Werkstück ergibt. Die Bewegungsumkehreinrichtung ermöglicht im Zusammenspiel mit den 4 Freiheitsgraden ein Vermeiden oder Reduzieren von Querkräften.

Beispielsweise kann die Koppeleinrichtung zum Koppeln mit dem Klemmkörper eine Kugelführungseinheit mit einer Buchse, einem in der Buchse angeordneten Kugelkäfig und einer in dem Kugelkäfig aufgenommenen oder aufnehmbaren Welle aufweisen, die zum Einführen in eine Einlassöffnung in dem Klemmkörper ausgeformt ist. Die Buchse kann sich orthogonal zu der Rotationsachse erstrecken, beispielsweise entlang der Y-Achse. Eine solche Kugelführungseinheit schafft eine bewegliche Verbindung zwischen dem Klemmkörper und dem Messsystem, wobei der Klemmkörper zwei Freiheitsgrade, beispielsweise entlang und um die Y-Achse, gegenüber dem Messsystem aufweist, wenn die Welle über die Einlassöffnung in dem Klemmkörper gelagert ist.

Die Koppeleinrichtung kann ferner einen Bolzen zum beweglichen Verbinden der Welle mit dem Klemmkörper aufweisen. Der Bolzen kann sich orthogonal zu der Welle erstrecken, beispielsweise entlang der X-Achse. Die Welle und der Klemmkörper können je Aufnahmeöffnungen für den Bolzen aufweisen, um die Bewegungen entlang und um die X-Achse zu ermöglichen, wodurch sich demnach zwei weitere Freiheitsgrade ergeben, beispielsweise entlang und um die X-Achse.

Es ist weiterhin von Vorteil, wenn die Radialkraft-Vorrichtung gemäß einer Ausführungsform eine Krafteinleitungseinheit zum Einleiten der Kraft aufweist. So kann die Kraft sowohl manuell, z.B. mittels eines Kniehebelspanners, oder automatisiert, z.B. pneumatisch über Pneumatikzylinder, bewirkt werden. Eine Druckfeder kann Bestandteil der Kraftbereitstellungseinrichtung sein, unabhängig, ob dies manuell oder automatisiert erfolgt. Diese Druckfeder ist dafür verantwortlich, eine definierte Kraft einzuleiten.

Es wird ferner ein Messsystem mit einer Radialkraft-Vorrichtung in einer der vorangehend beschriebenen Varianten und dem Konturmessgerät mit zwei Zentrierspitzen zum drehbaren Einspannen des Werkstücks entlang der Rotationsachse vorgestellt. Ein solches Messsystem schafft vorteilhafterweise eine drehbare Aufnahmemöglichkeit für das Werkstück sowie eine Möglichkeit zur Durchführung einer Vermessung des Werkstückes während dieses belastet wird.

Das Messsystem kann ferner eine Messeinrichtung zum Vermessen einer Kontur des Werkstücks aufweisen. So kann ein Messsystem mit mehreren Funktionen, zum Vermessen und zum Durchführen einer Vermessung des Werkstückes während dieses belastet wird, realisiert sein.

Der Ansatz wird nachstehend anhand der beigefügten Zeichnungen beispielhaft näher erläutert. Es zeigen:
Fig. 1 eine perspektivische seitliche Darstellung einer Radialkraft-Vorrichtung für ein Konturmessgerät zum Messen einer Kontur eines um eine Rotationsachse rotierbaren wellenförmigen Werkstücks gemäß einem Ausführungsbeispiel;
Fig. 2 eine seitliche Querschnittdarstellung eines Messsystems mit einer Radialkraft-Vorrichtung und einem Konturmessgerät zum Messen einer Kontur eines um eine Rotationsachse rotierbaren wellenförmigen Werkstücks gemäß einem Ausführungsbeispiel; und
Fig. 3 eine Aufsicht auf eine Radialkraft-Vorrichtung gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

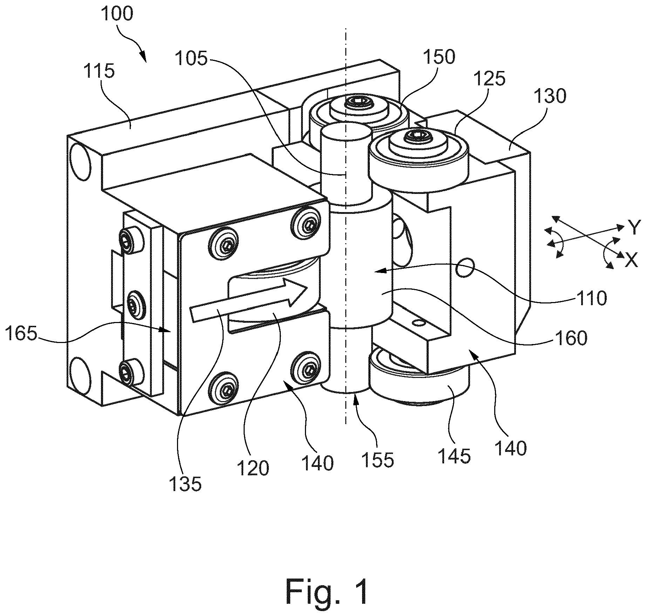

Fig. 1 zeigt eine perspektivische seitliche Darstellung einer Radialkraft-Vorrichtung 100 für ein Konturmessgerät zum Messen einer Kontur eines um eine Rotationsachse 105 rotierbaren wellenförmigen Werkstücks 110 gemäß einem Ausführungsbeispiel.

Lediglich beispielhaft ist das Werkstück 110 gemäß diesem Ausführungsbeispiel in der Radialkraft-Vorrichtung 100 aufgenommen.

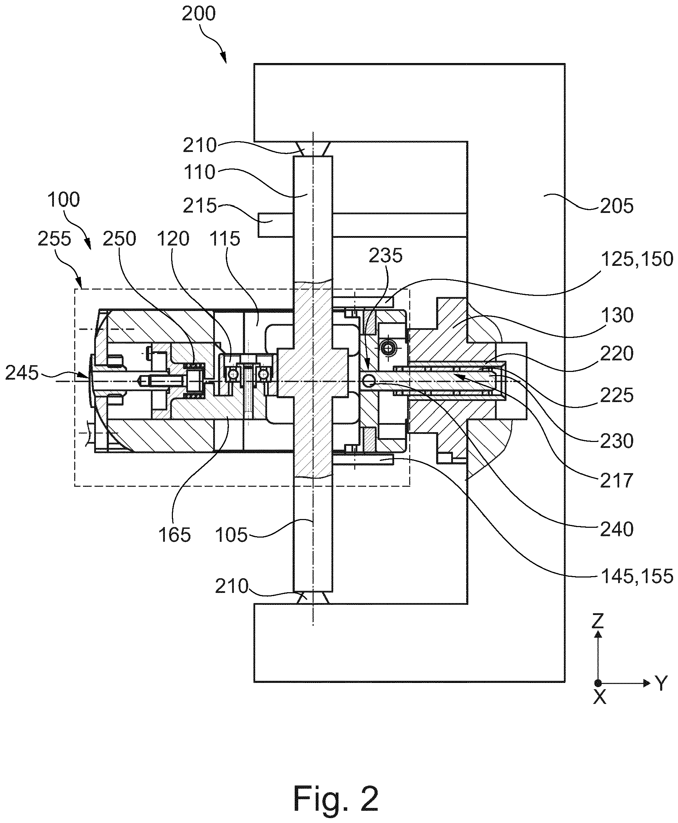

Die Radialkraft-Vorrichtung 100 weist einen Klemmkörper 115, eine Krafteinleitungsrolle 120, zumindest eine Gegenrolle 125 und eine Koppeleinrichtung 130 auf. Der Klemmkörper 115 ist zum radialen Umgreifen eines in dem Konturmessgerät aufgenommenen Werkstückabschnitts des Werkstücks 110 ausgeformt. Die Krafteinleitungsrolle 120 ist zum Aufbringen einer mechanischen radialen Kraft 135 auf das Werkstück 110 ausgebildet, um die Belastung auf das Werkstück 110 zu ermöglichen, wobei die Krafteinleitungsrolle 120 radial verschiebbar an dem Klemmkörper 115 gelagert ist. Die Gegenrolle 125 ist in dem Klemmkörper 115 gelagert. Die Gegenrolle 125 ist zum Abstützen des Werkstücks 110 beim Aufbringen der Kraft 135 vorgesehen. Die Koppeleinrichtung 130 ist zum Koppeln des Klemmkörpers 115 an dem in Fig. 2 gezeigten Konturmessgerät 205 ausgeformt.

Die Krafteinleitungsrolle 120 ist gemäß diesem Ausführungsbeispiel parallel zur Rotationsachse 105, die im Folgenden auch als "C-Achse" bezeichnet" wird, rotierbar gelagert, beispielsweise in einem Kugellager. Die Krafteinleitungsrolle 120 ist gemäß diesem Ausführungsbeispiel radial auf die Rotationsachse 105 zu verschiebbar an dem Klemmkörper 115 gelagert, hier entlang einer orthogonal zu der Rotationsachse 105 verlaufenden Y-Achse. Auch die Gegenrolle 125 ist gemäß diesem Ausführungsbeispiel parallel zur Rotationsachse 105 rotierbar gelagert, beispielsweise in einem Kugellager.

Der Klemmkörper 115 ist gemäß diesem Ausführungsbeispiel im Wesentlichen U-förmig zum radialen Umgreifen des Werkstückabschnitts ausgeformt, wobei die Krafteinleitungsrolle 120 und Gegenrolle 125 auf je gegenüberliegenden Schenkeln 140 des U-förmigen Klemmkörpers 115 angeordnet sind.

Die Radialkraft-Vorrichtung 100 weist gemäß diesem Ausführungsbeispiel ferner zumindest eine in dem Klemmkörper 115 gelagerte zweite Gegenrolle 145 zum Abstützen des Werkstücks 110 beim Aufbringen der Kraft 135 auf. Gemäß diesem Ausführungsbeispiel sind die Gegenrolle 125 und die zweite Gegenrolle 145 fluchtend angeordnet. Ferner ist die Krafteinleitungsrolle 120 gemäß diesem Ausführungsbeispiel eine horizontale Ebene zwischen der Gegenrolle 125 und der zweiten Gegenrolle 145 angeordnet. Hierbei ist die Krafteinleitungsrolle 120 gemäß diesem Ausführungsbeispiel mittig zwischen der Gegenrolle 125 und der zweiten Gegenrolle 145 angeordnet. Die Krafteinleitungsrolle 120 kann aber auch asymmetrisch angeordnet sein. Das ist werkstückabhängig. Jedoch ist die Krafteinleitungsrolle 120 stets zwischen den Gegenrollen 125, 145 angeordnet. In dem Klemmkörper 115 ist gemäß diesem Ausführungsbeispiel weiterhin eine weitere Gegenrolle 150 gelagert, die auf horizontaler Ebene mit der Gegenrolle 125 und/oder eine weitere zweite Gegenrolle 155 gelagert, die auf horizontaler Ebene mit der zweiten Gegenrolle 145 angeordnet ist. Ein oberer Abschnitt des Werkstücks 110 ist gemäß diesem Ausführungsbeispiel mittig zwischen der Gegenrolle 125 und der weiteren Gegenrolle 150 mit diesen kontaktiert oder kontaktierbar. Ein unterer Abschnitt des Werkstücks 110 ist gemäß diesem Ausführungsbeispiel mittig zwischen der zweiten Gegenrolle 145 und der weiteren zweiten Gegenrolle 155 mit diesen kontaktiert oder kontaktierbar. Die Krafteinleitungsrolle 120 ist angeordnet, um einen mittleren Abschnitt 160 des Werkstücks 110 zu kontaktieren, der zwischen dem oberen Abschnitt und dem unteren Abschnitt angeordnet ist. Ein Außenumfang des mittleren Abschnitts 160 ist gemäß diesem Ausführungsbeispiel größer als ein Außenumfang des oberen Abschnitts und des unteren Abschnitts. Alternativ können der Außenumfang des mittleren Abschnitts 160 auch gleich oder kleiner als ein Außenumfang des oberen Abschnitts und des unteren Abschnitts sein.

Die Radialkraft-Vorrichtung 100 weist gemäß diesem Ausführungsbeispiel ferner ein Bauteil 165 auf, wobei die Krafteinleitungsrolle 120 in dem Bauteil 165 gelagert ist. Das Bauteil 165 ist beispielsweise als ein quaderförmiger Block ausgeführt. Das Bauteil 165 ist radial verschiebbar an dem Klemmkörper 115 gelagert.

Ferner weist die Radialkraft-Vorrichtung 100 gemäß diesem Ausführungsbeispiel eine Bewegungsumkehreinrichtung auf, die ausgebildet ist, um den Klemmkörper 115 ansprechend auf eine Bewegung des Bauteils 165 in eine radiale erste Richtung in eine der ersten Richtung entgegengesetzte zweite Richtung zu bewegen. Die radiale erste Richtung ist gemäß diesem Ausführungsbeispiel eine Bewegung entlang der Y-Achse auf das Werkstück 110 zu, um im Folgenden die Kraft 135 auf das Werkstück 110 zu bewirken. Dadurch bewegt sich der Klemmkörper in die zweite (- Y-Richtung) auf das Werkstück 110 zu, sodass die Gegenrollen 125, 145, 150, 155 auch anliegen

Die hier vorgestellte Radialkraft-Vorrichtung 100 realisiert einen Mechanismus zur radialen Kraftbeaufschlagung eines wellenförmigen Werkstückes 110, das gemäß diesem Ausführungsbeispiel als eine Nockenwelle ausgeformt ist. Die Radialkraft-Vorrichtung 100 ist für alle Messmethoden einsetzbar, die eine radiale Kraftbeaufschlagung während der Messung benötigen. Hierzu erfolgt gemäß einem Ausführungsbeispiel eine örtliche Aufbringung der mechanischen Kraft 135 in Form einer Radialkraft an dem wellenförmigen Werkstück 110 während der Vermessung des Werkstücks 110.

Die Radialkraft-Vorrichtung 100 ermöglicht eine Querkraftfreie radiale Belastung wellenförmiger Werkstücke 110. Vorteilhafterweise erfolgt lediglich ein minimaler Verschleiß an werkstückberührenden Komponenten wie der Krafteinleitungsrolle 120 und/oder den Gegenrollen 125, 145, 150, 155.

Fig. 2 zeigt eine seitliche Querschnittdarstellung eines Messsystems 200 mit einer Radialkraft-Vorrichtung 100 und einem Konturmessgerät 205 zum Messen einer Kontur eines um eine Rotationsachse 105 rotierbaren wellenförmigen Werkstücks 110 gemäß einem Ausführungsbeispiel. Bei der Radialkraft-Vorrichtung 100 kann es sich um die in Fig. 1 beschriebene Radialkraft-Vorrichtung 100 handeln. Auch das Werkstück 110 kann das in Fig. 1 beschriebene Werkstück 110 sein.

Das Konturmessgerät 205 weist zwei Zentrierspitzen 210 zum drehbaren Einspannen des Werkstücks 110 entlang der Rotationsachse 105 auf. Optional weist das Messsystem 200 gemäß diesem Ausführungsbeispiel ferner eine Messeinrichtung 215 zum Vermessen der Kontur des Werkstücks 110 auf.

Die Koppeleinrichtung 130 ist gemäß diesem Ausführungsbeispiel ausgeformt, um eine Längsbewegung des Klemmkörpers 115 entlang der Y-Achse und/oder eine Rotationsbewegung um die Y-Achse und/oder eine Längsbewegung des Klemmkörpers 115 entlang einer X-Achse und/oder eine Rotationsbewegung um die X-Achse zu ermöglichen, wobei die Y-Achse und die X-Achse orthogonal zueinander und orthogonal zu der Rotationsachse 105 ausgerichtet sind.

Gemäß diesem Ausführungsbeispiel weist die Koppeleinrichtung 130 zum Koppeln mit dem Klemmkörper 115 eine Kugelführungseinheit 217 mit einer Buchse 220, einem in der Buchse 220 angeordneten Kugelkäfig 225 und/oder einer in dem Kugelkäfig 225 aufgenommenen oder aufnehmbaren Welle 230 auf, die zum Einführen in eine Einlassöffnung 235 in den Klemmkörper 115 ausgeformt ist. Die Buchse 220 erstreckt sich gemäß diesem Ausführungsbeispiel orthogonal zu der Rotationsachse 105, hier beispielsweise entlang der Y-Achse. Die Koppeleinrichtung 130 weist ferner gemäß diesem Ausführungsbeispiel einen Bolzen 240 zum beweglichen Verbinden der Welle 230 mit dem Klemmkörper 115 auf. Der Bolzen 240 erstreckt sich gemäß diesem Ausführungsbeispiel orthogonal zu der Welle 230 und/oder der Rotationsachse 105, hier beispielsweise entlang der X-Achse. Die Welle 230 und der Klemmkörper 115 weisen gemäß diesem Ausführungsbeispiel je Aufnahmeöffnungen für den Bolzen 240 auf, um die Bewegungen entlang und um die X-Achse zu ermöglichen.

Die Radialkraft-Vorrichtung 100 weist gemäß diesem Ausführungsbeispiel ferner eine Krafteinleitungseinheit 245 zum Einleiten der Kraft auf. Zwischen der Krafteinleitungseinheit 245 und der Krafteinleitungsrolle 120 ist ferner gemäß diesem Ausführungsbeispiel eine Druckfeder 250 aufgenommen. Durch die Druckfeder 250 wird die Kraft auf das Werkstück 110 gebracht. Die Krafteinleitung erfolgt mechanisch, z.B. mittels eines Kniehebelspanners oder pneumatisch.

Die Radialkraft-Vorrichtung 100 ermöglicht gemäß diesem Ausführungsbeispiel eine automatisierte Möglichkeit für eine Vermessung des Werkstückes 110 während dieses belastet wird, wodurch vorteilhafterweise eine Zeitersparnis gegenüber einer manuellen Vermessung entsteht.

Der Klemmkörper 115 kann zusammen mit dem Bauteil 165 auch als Druckvorrichtung 255 bezeichnet werden.

Die hier vorgestellte Radialkraft-Vorrichtung 100 ermöglicht es vorteilhafterweise, eine zusätzliche Radialkraftbelastung an wellenförmigen Werkstücken 110 während der Vermessung in Konturmessgeräten 205, auch "Contour"-Geräte genannt, durchzuführen. Hierbei wird das zwischen den Zentrierspitzen 210 vertikal gespannte Werkstück 110 aufgrund der von der Kraft bewirkten Querkraftbelastung jedoch vorteilhafterweise nicht aus seiner Spannposition herausgedrückt und es wirken keine Querkräfte auf die Zentrierspitzen 210.

Es ist ferner eine Anbindung der Radialkraft-Vorrichtung 100 am Konturmessgerät 205 realisiert, wobei diese vorteilhafterweise gemäß diesem Ausführungsbeispiel vier Freiheitsgrade gegenüber dem Konturmessgerät 205 hat. Dadurch ergibt sich ein geschlossener Kraftfluss zwischen der Radialkraft-Vorrichtung 100 und dem Werkstück 110. Als werkstückberührende Elemente kommen kugelgelagerte Scheiben zum Einsatz, hier die Krafteinleitungsrolle 120 und die Gegenrollen 125, 145, 150, 155.

Die radiale Kraftbelastung während der Vermessung des Werkstücks 110 simuliert gemäß einem Ausführungsbeispiel eine Betriebskraft, die später im endeingebauten Zustand auf diese wirkt. So kann bereits im Vorfeld festgestellt werden, ob die geometrischen Toleranzvorgaben unter Last eingehalten werden.

Die radiale Krafteinleitung auf das Werkstück 110 sollte nicht einseitig ausgeführt werden, da sonst durch die radiale Belastung Querkräfte an den Zentrierspitzen 210 des Contour-Messgerätes auftreten und so die Gefahr besteht, dass das Werkstück 110 aus den Zentrierspitzen 210 herausgedrückt wird. Daher wurde die Radialkraft-Vorrichtung 100 entwickelt, die keine Querkräfte auf die Zentrierspitzen 210, trotz radialer Belastung auf das Werkstück 110, überträgt.

Die gesamte Radialkraft-Vorrichtung 100 besteht gemäß diesem Ausführungsbeispiel aus der Koppeleinrichtung 130 in Form eines "Grundkörpers der Druckvorrichtung" und der Druckvorrichtung 255, die über die Kugelführungseinheit 217 im "Grundkörper der Druckvorrichtung" gelagert ist. Somit hat die Druckvorrichtung 255 zwei Freiheitsgrade, die Y-Translationsachse und Y-Rotationsachse, gegenüber der Koppeleinrichtung 130, die gemäß diesem Ausführungsbeispiel fest mit einem Maschinenbett des Konturmessgeräts 205 verschraubt ist. Weiterhin ist die Welle 230 der Kugelführungseinheit 217 gemäß diesem Ausführungsbeispiel über den Bolzen 240 im Klemmkörper 115 gelagert, woraus sich zwei weitere Freiheitsgrade ergeben, die X-Translationsachse und X-Rotationsachse. Die restlichen zwei Freiheitsgrade, eine Z-Translation entlang der Z-Achse und Z-Rotation um die Z-Achse, sind gemäß diesem Ausführungsbeispiel gesperrt. Der Klemmkörper 115 dient als Aufnahme der beispielhaft vier Gegenrollen 125, 145, 150, 155 und der Krafteinleitungsrolle 120, wobei die Krafteinleitungsrolle 120 in Y-Richtung schiebbar über das hier beispielhaft quaderförmige Bauteil 165 im Klemmkörper 115 gelagert ist. Beispielsweise ist eine Achse der Krafteinleitungsrolle 120 von einer Durchgangsöffnung des Bauteils 165 aufgenommen. Die Gegenrollen 125, 145, 150, 155 sind gemäß diesem Ausführungsbeispiel fest mit dem Klemmkörper 115 verschraubt und/oder es sind gemäß diesem Ausführungsbeispiel jeweils zwei Gegenrollen 125, 150 oberhalb und zwei Gegenrollen 145, 155 unterhalb der Krafteinleitungsrolle 120, in Z-Richtung gesehen, angeordnet. Die Krafteinleitungsrolle 120 und/oder die vier Gegenrollen 125, 145, 150, 155 selber sind gemäß diesem Ausführungsbeispiel jeweils mit einem Kugellager gelagert.

Bei einem Funktionsbeispiel wird das Werkstück 110 zwischen den zwei Zentrierspitzen 210 aufgenommen. Zum Aufbringen der simulierten Betriebskraft auf das zu messende Werkstück 110 erfolgt die Krafteinleitung über die in +Y-Richtung schiebbare Krafteinleitungsrolle 120, die sich am Klemmkörper 115 abstützt. Dadurch wird der gesamte Klemmkörper 115 über die Kugelführungseinheit 217 in -Y-Richtung geführt bis die Gegenrollen 125, 145, 150, 155 auch am Werkstück 110 anliegen. Das Führen des Klemmkörpers 115 in der -Y-Richtung erfolgt gemäß einem Ausführungsbeispiel durch das Verschieben der Krafteinleitungsrolle 120 an das Werkstück 110. Das Verschieben der Krafteinleitungsrolle 120 kann wiederum manuell, z.B. über einen Kniehebelspanner, oder auch pneumatisch, z.B. durch einen Pneumatikzylinder, erfolgen. Über die Druckfeder 250 wird die erforderliche, radiale Belastung auf das Werkstück 110 gebracht. Der Kraftfluss erfolgt dabei vom Klemmkörper 115 auf die Krafteinleitungsrolle 120 über das Werkstück 110 auf die Gegenrollen 125, 145, 150, 155 zurück auf den Klemmkörper 115. Durch die vier gegebenen Freiheitsgrade wirken keine Querkräfte auf das zu messende Werkstück 110, wodurch eine querkraftfreie, radiale Belastung bezogen auf das Maschinenbett des Werkstückes 110 möglich ist.

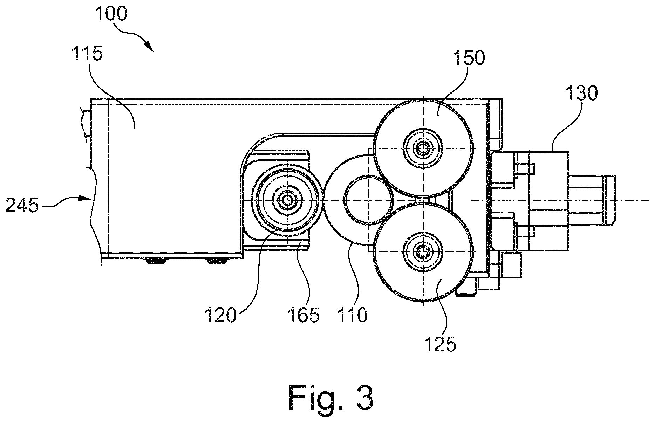

Fig. 3 zeigt eine Aufsicht auf eine Radialkraft-Vorrichtung 100 gemäß einem Ausführungsbeispiel. Dabei kann es sich um die in Fig. 1 oder 2 beschriebene Radialkraft-Vorrichtung 100 handeln.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden, wobei der Schutzumfang der Erfindung allerdings durch die nachfolgenden Ansprüche eingeschränkt ist.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Radialkraft-Vorrichtung (100) für ein Konturmessgerät (205) zum Messen einer Kontur eines um eine Rotationsachse (105) rotierbaren wellenförmigen Werkstücks (110), wobei die Radialkraft-Vorrichtung (100) die folgenden Merkmale umfasst:
einen Klemmkörper (115) zum radialen Umgreifen eines in dem Konturmessgerät (205) aufgenommenen Werkstückabschnitts (160) des Werkstücks (110);
eine Krafteinleitungsrolle (120) zum Aufbringen einer mechanischen radialen Kraft (135) auf das Werkstück (110), um eine Belastung auf das Werkstück (110) einzuleiten, wobei die Krafteinleitungsrolle (120) entlang einer orthogonal zu der Rotationsachse (105) verlaufenden Y-Achse radial verschiebbar zum Werkstück (110) an dem Klemmkörper (115) gelagert ist, wobei die Krafteinleitungsrolle (120) parallel zur Rotationsachse (105) rotierbar gelagert ist;
zumindest eine in dem Klemmkörper (115) gelagerte Gegenrolle (125) zum Abstützen des Werkstücks (110) beim Aufbringen der Kraft (135), wobei die Gegenrolle (125) parallel zur Rotationsachse (105) rotierbar gelagert ist, und eine in dem Klemmkörper (115) gelagerte weitere Gegenrolle (150), die auf horizontaler Ebene mit der Gegenrolle (125) gelagert ist;
zumindest eine in dem Klemmkörper (115) gelagerte zweite Gegenrolle (145) zum Abstützen des Werkstücks (110) beim Aufbringen der Kraft (135), und eine in dem Klemmkörper (115) gelagerte weitere zweite Gegenrolle (155), die auf horizontaler Ebene mit der zweiten Gegenrolle (145) angeordnet ist, wobei die Gegenrolle (125) und die zweite Gegenrolle (145) fluchtend angeordnet sind und die Krafteinleitungsrolle (120) in einer horizontalen Ebene zwischen der Gegenrolle (125) und der zweiten Gegenrolle (145) angeordnet ist, sodass die Gegenrolle (125) und die weitere Gegenrolle (150) oberhalb und die zweite Gegenrolle (145) und die weitere zweite Gegenrolle (155) unterhalb der Krafteinleitungsrolle (120), in Z-Richtung gesehen, angeordnet sind;
ein Bauteil (165), wobei die Krafteinleitungsrolle (120) in dem Bauteil (165) gelagert ist, das radial verschiebbar an dem Klemmkörper (115) gelagert ist;
eine Bewegungsumkehreinrichtung, die ausgebildet ist, um den Klemmkörper (115) ansprechend auf eine Bewegung des Bauteils (165) in eine radiale erste Richtung in eine der ersten Richtung entgegengesetzte zweite Richtung zu bewegen; und
eine Koppeleinrichtung (130) zum Koppeln des Klemmkörpers (115) an dem Konturmessgerät (205).

2. Radialkraft-Vorrichtung (100) gemäß Anspruch 1, bei der der Klemmkörper (115) im Wesentlichen U-förmig zum radialen Umgreifen des Werkstückabschnitts (160) ausgeformt ist, wobei die Krafteinleitungsrolle (120) und Gegenrolle (125, 150) auf je gegenüberliegenden Schenkeln (140) des U-förmigen Klemmkörpers (115) angeordnet sind.

3. Radialkraft-Vorrichtung (100) gemäß einem der vorangegangenen Ansprüche, bei der die Koppeleinrichtung (130) ausgeformt ist, um eine Längsbewegung des Klemmkörpers (115) entlang der Y-Achse und/oder eine Rotationsbewegung um die Y-Achse und/oder eine Längsbewegung des Klemmkörpers (115) entlang einer X-Achse und/oder eine Rotationsbewegung um die X-Achse zu ermöglichen, wobei die Y-Achse und die X-Achse orthogonal zueinander und orthogonal zu der Rotationsachse (105) ausgerichtet sind.

4. Radialkraft-Vorrichtung (100) gemäß einem der vorangegangenen Ansprüche, bei der die Koppeleinrichtung (130) zum Koppeln mit dem Klemmkörper (115) eine Kugelführungseinheit (217) mit einer Buchse (220), einem in der Buchse (220) angeordneten Kugelkäfig (225) und/oder einer in dem Kugelkäfig (225) aufgenommenen oder aufnehmbaren Welle (230) aufweist, die zum Einführen in eine Einlassöffnung (235) in dem Klemmkörper (115) ausgeformt ist.

5. Radialkraft-Vorrichtung (100) gemäß Anspruch 4, bei der die Koppeleinrichtung (130) einen Bolzen (240) zum beweglichen Verbinden der Welle (230) mit dem Klemmkörper (115) aufweist.

6. Radialkraft-Vorrichtung (100) gemäß einem der vorangegangenen Ansprüche, mit einer Krafteinleitungseinheit (245) zum Einleiten der Kraft (135).

7. Messsystem (200) mit einer Radialkraft-Vorrichtung (100) gemäß einem der vorangegangenen Ansprüche und dem Konturmessgerät (205) mit zwei Zentrierspitzen (210) zum drehbaren Einspannen des Werkstücks (110) entlang der Rotationsachse (105).

8. Messsystem (200) gemäß Anspruch 7, mit einer Messeinrichtung (215) zum Vermessen einer Kontur des Werkstücks (110).

## Claims

1. Measuring system (100) with a machine bed (105), in which a workpiece can be received along a receiving axis (125), and a sensor device (110), which can be moved in a number of directions in relation to the machine bed (105) and has a touch sensor (115) for sensing points in a machine coordinate system of the measuring system (100) and has at least one optical sensor (190, 195) for measuring the contour of the workpiece, wherein the measuring system (100) has the following features:
a reference module (120), which is fastened at a fixed point (127) of the machine bed (105) of the measuring system (100) and has at least a first measuring point and a second measuring point,
the touch sensor (115), which can be moved along at least one sensor measuring axis (130) and is designed to sense the first measuring point and the second measuring point in order to detect an alignment of the sensor measuring axis (130) with respect to the machine coordinate system in order to detect a change in an angle of the sensor measuring axis (130) with respect to the machine coordinate system,
wherein the measuring system (100) is designed to calibrate a first calibrating position of the first measuring point and provide a first reference position and to calibrating a second calibrating position of the second measuring point and provide a second reference position by using the touch sensor (115) in a calibration process,
wherein the touch sensor (115) is designed to measure a first current position of the first measuring point and to measure a second current position of the second measuring point, the measuring system (100) having an evaluation device (170), which is designed to compare the current first position with the first reference position and the second current position with the second reference position and to detect an incorrect setting of the sensor measuring axis (130) with respect to the machine coordinate system if the first current position deviates from the first reference position and/or the second current position deviates from the second reference position and/or to detect a correct setting of the sensor measuring axis (130) with respect to the machine coordinate system if the first current position corresponds to the first reference position and/or the second current position corresponds to the second reference position, and
a correction device (175), which is designed to correct the sensor measuring axis (130) or a measuring formula for measuring the workpiece by using the current first position and the current second position if the incorrect setting is detected.

2. Measuring system (100) according to Claim 1, in which the reference module (120) is fastened or can be fastened at the fixed point (127), which is arranged at the end of a headstock (135) of the machine bed (105) remote from a centring point (140) of the headstock (135).

3. Measuring system (100) according to one of the preceding claims, in which the reference module (120) comprises a hard metal.

4. Measuring system (100) according to one of the preceding claims, in which the reference module (120) has at least one planar reference surface (155), on which the first measuring point and the second measuring point are arranged.

5. Measuring system (100) according to one of the preceding claims, in which the reference module (120) has a measuring track, on which the first measuring point and the second measuring point are arranged.

6. Measuring system (100) according to either of Claims 4 and 5, in which the planar reference surface (155) is arranged running obliquely in relation to the sensor measuring axis (130) and/or the receiving axis (125) .

7. Measuring system (100) according to one of the preceding claims, in which the reference module (120) has at least one further first measuring point and one further second measuring point, wherein the touch sensor (115) can be moved along at least one further sensor measuring axis in order to sense the further first measuring point and the further second measuring point in order to detect an alignment of the further sensor measuring axis with respect to the machine coordinate system.

8. Method (500) for operating a measuring system (100) according to one of the preceding claims, wherein the method (500) has the following steps:
calibrating (505) a first calibrating position of the first measuring point of the reference module (120) fastened at the fixed point (127) of the measuring system (100) by using the touch sensor (115) of the sensor device (110) and providing the first calibrating position as a first reference position and calibrating a second calibrating position of the second measuring point of the reference module (120) by using the touch sensor (115) and providing the second calibrating position as a second reference position;
moving (510) the sensor device (110) to level with the workpiece;
measuring (515) at least one point on a surface of the workpiece received in the machine bed (105) by using the sensor device (110);
moving (520) the sensor device (110) to level with the reference module (120);
measuring (525) a first current position of the first measuring point by using the touch sensor (115) of the sensor device (110) and a second current position of the second measuring point; and
adjusting (530) the sensor measuring axis (130) with respect to the machine coordinate system (125) by using a first deviation of the first current position from the first reference position and/or a second deviation of the second current position from the second reference position.

## Revendications

1. Système de mesure (100) comprenant un bâti de machine (105) dans lequel une pièce peut être reçue le long d'un axe de réception (125), et un dispositif capteur (110) qui peut être déplacé dans plusieurs directions par rapport au bâti de machine (105) et qui comporte un capteur tactile (115) destiné à détecter des points dans un système de coordonnées machine du système de mesure (100) et au moins un capteur optique (190, 195) destiné à mesurer le contour de la pièce, le système de mesure (100) présentant les éléments caractéristiques suivants :
un module de référence (120) fixé à un point fixe (127) du bâti de la machine (105) du système de mesure (100) et comportant au moins un premier point de mesure et un deuxième point de mesure,
le capteur tactile (115) qui est mobile le long d'au moins un axe de mesure de capteur (130) et qui est conçu pour détecter le premier point de mesure et le deuxième point de mesure afin d'orienter l'axe de mesure de capteur (130) par rapport au système de coordonnées de machine pour détecter une variation d'un angle de l'axe de mesure de capteur (130) par rapport au système de coordonnées de machine,
le système de mesure (100) étant conçu pour déterminer une première position d'étalonnage du premier point de mesure et la fournir comme première position de référence et déterminer une deuxième position d'étalonnage du deuxième point de mesure et la fournir comme deuxième position de référence, dans un procédé d'étalonnage à l'aide du capteur tactile (115),
le capteur tactile (115) étant conçu pour mesurer une première position actuelle du premier point de mesure et mesurer une deuxième position actuelle du deuxième point de mesure, le système de mesure (100) comportant un dispositif d'évaluation (170) qui est conçu pour comparer la première position actuelle à la première position de référence et la deuxième position actuelle à la deuxième position de référence et détecter un déréglage de l'axe de mesure de capteur (130) par rapport au système de coordonnées de machine si la première position actuelle diffère de la première position de référence et/ou la deuxième position actuelle diffère de la deuxième position de référence et/ou pour détecter un réglage correct de l'axe de mesure de capteur (130) par rapport au système de coordonnées de machine si la première position actuelle correspond à la première position de référence et/ou la deuxième position actuelle correspond à la deuxième position de référence, et
un dispositif de correction (175) qui est conçu pour corriger l'axe de mesure de capteur (130) ou une formule de mesure destinée à mesurer la pièce à l'aide de la première position actuelle et de la deuxième position actuelle si un déréglage est détecté.

2. Système de mesure (100) selon la revendication 1, dans lequel le module de référence (120) est fixé ou peut être fixé au point fixe (127) qui est situé à une extrémité de poupée (135) qui est opposée à une pointe de centrage (140) d'une poupée (135) du bâti de machine (105) .

3. Système de mesure (100) selon l'une des revendications précédentes, dans lequel le module de référence (120) est un métal dur.

4. Système de mesure (100) selon l'une des revendications précédentes, dans lequel le module de référence (120) comporte au moins une surface de référence plane (155) sur laquelle sont situés le premier point de mesure et le deuxième point de mesure.

5. Système de mesure (100) selon l'une des revendications précédentes, dans lequel le module de référence (120) comporte une piste de mesure sur laquelle sont situés au moins le premier point de mesure et le deuxième point de mesure.

6. Système de mesure (100) selon l'une des revendications 4 à 5, dans lequel la surface de référence plane (155) est disposée de manière à s'étendre obliquement par rapport à l'axe de mesure de capteur (130) et/ou à l'axe de réception (125).

7. Système de mesure (100) selon l'une des revendications précédentes, dans lequel le module de référence (120) comporte au moins un autre premier point de mesure et un autre deuxième point de mesure, le capteur tactile (115) pouvant être déplacé le long d'au moins un autre axe de mesure de capteur pour détecter l'autre premier point de mesure et l'autre deuxième point de mesure afin de détecter l'orientation de l'autre axe de mesure de capteur par rapport au système de coordonnées de machine.

8. Procédé (500) de fonctionnement d'un système de mesure (100) selon l'une des revendications précédentes, le procédé (500) comportant les étapes suivantes :
déterminer (505) une première position d'étalonnage du premier point de mesure du module de référence (120), fixé au point fixe (127) du système de mesure (100), à l'aide du capteur tactile (115) du dispositif capteur (110) et fournir la première position d'étalonnage comme première position de référence et déterminer une deuxième position d'étalonnage du deuxième point de mesure du module de référence (120) à l'aide du capteur tactile (115) et fournir la deuxième position d'étalonnage comme deuxième position de référence ;
déplacer (510) le dispositif capteur (110) au niveau de la pièce ;
mesurer (515) au moins un point sur une surface de la pièce reçue dans le bâti de machine (105) à l'aide du dispositif capteur (110) ;
déplacer (520) le dispositif capteur (110) au niveau du module de référence (120) ;
mesurer (525) une première position actuelle du premier point de mesure à l'aide du capteur tactile (115) du dispositif capteur (110) et une deuxième position actuelle du deuxième point de mesure ; et
ajuster (530) l'axe de mesure de capteur (130) par rapport au système de coordonnées de machine (125) à l'aide d'un premier écart entre la première position actuelle et la première position de référence et/ou un d'un deuxième écart entre la deuxième position actuelle et la deuxième position de référence.
